# EUROPEAN PATENT APPLICATION

(11) **EP 4 138 020 A1**
(43) Date of publication of application: **22.02.2023**
(21) Application number: 21863231.3
(22) Date of filing: 19.04.2021
(51) Int. Cl.: G06Q 30/02, G06Q 30/06

(54) **ELECTRONIC CERTIFICATE ASSIGNMENT METHOD AND APPARATUS, DEVICE AND STORAGE MEDIUM**

(30) Priority: 01.09.2020 CN 202010905922
(71) Applicant: Beijing Wodong Tianjun Information Technology Co., Ltd., 100176 Beijing (CN); Beijing Jingdong Century Trading Co., Ltd., Beijing 100176 (CN)
(72) Inventor: YANG, Bingcheng, Beijing 100176 (CN); DU, Gang, Beijing 100176 (CN); PENG, Hua, Beijing 100176 (CN)
(74) Representative: Barker Brettell LLP
(86) International application number: PCT/CN2021/088034
(87) International publication number: WO 2022/048161

(57) **Abstract**

Embodiments of the present application provide an electronic voucher assigning method and apparatus, a device and a storage medium, where the method includes: displaying link information in response to a sharing trigger operation for sharing information from a first user, where the sharing information is information matching order information of the first user (101); determining an electronic voucher matching the first user in response to an opening trigger operation for the link information from the first user (102); assigning the electronic voucher matching the first user to an account of the first user (103). Information provided to the user conforms to current actual needs of the user; the electronic voucher assigned to the user meets the current needs of the user, and the user is assigned with the electronic voucher that meets the user. A utilization rate and a conversion rate of the electronic voucher are promoted; the user's attention to the electronic voucher is improved and an interactivity in the process of collecting the electronic voucher is enhanced.

## Description

This application claims priority to Chinese Patent Application No. 202010905922.2, which was filed with China National Intellectual Property Administration on September 01, 2020 and titled "ELECTRONIC VOUCHER ASSIGNING METHOD, APPARATUS, DEVICE AND STORAGE MEDIUM", the entire contents of which are incorporated herein by reference.

### TECHNICAL FIELD

Embodiments of the present application relate to the field of electronic technology, and in particular, to an electronic voucher assigning method and apparatus, a device and a storage medium.

### BACKGROUND

With the development of the mobile Internet, in order to better meet the needs of users for online learning, entertainment and consumption, a variety of virtual object assigning methods have emerged. The virtual objects are, for example, digital money and electronic red packets. A virtual object may be referred to as an electronic voucher.

When assigning electronic vouchers, it is generally to charge a directional electronic voucher into a user's account.

Therefore, in the process of implementing the present application, the inventor found that there are at least the following problems in the prior art: the electronic voucher assigned to each user does not meet the needs of the user, and the interactivity of the electronic voucher assignment is reduced, resulting in a low utilization rate and conversion rate of the electronic voucher.

### SUMMARY

Embodiments of the present application provide an electronic voucher assigning method and apparatus, a device and a storage medium, which are used to solve the problem of low utilization rate and conversion rate of the electronic voucher, since the electronic voucher distributed to each user does not meet the needs of the user that the interactivity of electronic voucher distribution is reduced.

In a first aspect, an embodiment of the present application provides an electronic voucher assigning method, where the method is applied to a terminal device, including:
displaying link information in response to a sharing trigger operation for sharing information from a first user, where the sharing information is information matching order information of the first user;
determining an electronic voucher matching the first user in response to an opening trigger operation for the link information from the first user;
assigning the electronic voucher matching the first user to an account of the first user.

One embodiment of the above application has the following advantages or beneficial effects: after a user completes an order by user interaction with a terminal device, the terminal device may generate sharing information matching order information. The terminal device displays the sharing information according to a user's trigger instruction, and then the user shares the sharing information. Then, the terminal device displays link information indicating an electronic voucher matching the first user. After the terminal device receives an opening instruction for the link information form the user, the terminal device stores the electronic voucher matching the user in an account of the first user. Since the obtained sharing information matches the order information, information provided to the user conforms to current actual needs of the user, and sharing information that meets the current needs of the user is recommended for the user. Moreover, the electronic voucher provided to the user matches the user, so that the electronic voucher assigned to the user meets the current needs of the user, and the user is assigned with the electronic voucher that meets the user. Since the user is assigned with the electronic voucher that meets the user, a utilization rate and a conversion rate of the electronic voucher are promoted. At the same time, since before the electronic voucher is assigned to the user, after the user completes the order and the terminal device provides the user with the sharing information matching the order information, the user interacts with the terminal device to complete sharing of the sharing information, and then the terminal device assigns the electronic voucher to the user, thus further improving the user's attention to the electronic voucher and enhancing an interactivity in the process of collecting (receiving) the electronic voucher.

Or, another embodiment of the above application has the following advantages or beneficial effects: sharing information matching order information of a first user can be determined based on a user's behavior data and/or portrait data, so that the sharing information generated for the user meets current needs of the user. Moreover, based on the data information of the first user, the electronic voucher matching the data information of the first user is determined, where the data information of the first user includes one or more of the following: order information, behavior data, portrait data, sharing times, and user information, so that the electronic voucher assigned to the user meets the current needs of the user, and the user is assigned with the electronic voucher that meets the user.

Or, another embodiment of the above application has the following advantages or beneficial effects: a first user can be analyzed based on processes of whether a user collecting identifier exists in a pre-stored collecting information table, whether the first user exists in a preset user library, etc., and then an electronic voucher that is truly suitable for the first user can be assigned to the first user.

Or, another embodiment of the above application has the following advantages or beneficial effects: an electronic voucher can be established according to electronic voucher information, so as to facilitate subsequent determination of the electronic voucher matching the first user. In addition, the matching relationship between the user and the electronic voucher can be adjusted according to the electronic voucher using information, so that a better match is achieved between the electronic voucher subsequently assigned to the first user and the user.

In a second aspect, an embodiment of the present application provides an electronic voucher assigning apparatus, where the apparatus is applied to a terminal device, including:
a first displaying unit, configured to display link information in response to a sharing trigger operation for sharing information from a first user, where the sharing information is information matching order information of the first user;
a first determining unit, configured to determine an electronic voucher matching the first user in response to an opening trigger operation for the link information from the first user;
an assigning unit, configured to assign the electronic voucher matching the first user to an account of the first user.

One embodiment of the above application has the following advantages or beneficial effects: after a user completes an order by user interaction with a terminal device, the terminal device may generate sharing information matching order information. The terminal device displays the sharing information according to a user's trigger instruction, and then the user shares the sharing information. Then, the terminal device displays link information indicating an electronic voucher matching the first user. After the terminal device receives an opening instruction for the link information from the user, the terminal device stores the electronic voucher matching the user in an account of the first user. Since the obtained sharing information matches the order information, information provided to the user conforms to current actual needs of the user, and sharing information that meets the current needs of the user is recommended for the user. Moreover, the electronic voucher provided to the user matches the user, so that the electronic voucher assigned to the user meets the current needs of the user, and the user is assigned with the electronic voucher that meets the user. Since the user is assigned with the electronic voucher that meets the user, a utilization rate and a conversion rate of the electronic voucher are promoted. At the same time, since before the electronic voucher is assigned to the user, after the user completes the order and the terminal device provides the user with the sharing information matching the order information, the user interacts with the terminal device to complete sharing of the sharing information, and then the terminal device assigns the electronic voucher to the user, thus further improving the user's attention to the electronic voucher and enhancing an interactivity in the process of collecting the electronic voucher.

Or, another embodiment of the above application has the following advantages or beneficial effects: sharing information matching order information of a first user can be determined based on a user's behavior data and/or portrait data, so that the sharing information generated for the user meets current needs of the user. Moreover, based on the data information of the first user, the electronic voucher matching the data information of the first user is determined, where the data information of the first user includes one or more of the following: order information, behavior data, portrait data, sharing times, and user information, so that the electronic voucher assigned to the user meets the current needs of the user, and the user is assigned with the electronic voucher that meets the user.

Or, another embodiment of the above application has the following advantages or beneficial effects: a first user can be analyzed based on processes of whether a user collecting identifier exists in a pre-stored collecting information table, whether the first user exists in a preset user library, etc., and then an electronic voucher that is truly suitable for the first user can be assigned to the first user.

Or, another embodiment of the above application has the following advantages or beneficial effects: an electronic voucher can be established according to electronic voucher information, so as to facilitate subsequent determination of the electronic voucher matching the first user. In addition, the matching relationship between the user and the electronic voucher can be adjusted according to the electronic voucher using information, so that a better match is achieved between the electronic voucher subsequently assigned to the first user and the user.

In a third aspect, an embodiment of the present application provides a terminal device, including: a memory and a processor;
the memory is configured to store a memory of executable instructions for the processor;
the processor is configured to execute the method provided in the first aspect according to the executable instructions.

In a fourth aspect, an embodiments of the present application provides a computer-readable storage medium, where the computer-readable storage medium stores computer execution instructions, which, when executed by a processor, are used to implement the method provided in the first aspect.

In a fifth aspect, an embodiment of the present application provides a computer program, including program codes, when a computer runs the computer program, the program codes execute the method provided in the first aspect and the method provided in any implementation of the first aspect.

The electronic voucher assigning method, apparatus, device and storage medium provided by the embodiments of the present application, since the obtained sharing information matches the order information, information provided to the user conforms to current actual needs of the user, and sharing information that meets the current needs of the user is recommended for the user. Moreover, the electronic voucher provided to the user matches the user, so that the electronic voucher assigned to the user meets the current needs of the user, and the user is assigned with the electronic voucher that meets the user. Since the user is assigned with the electronic voucher that meets the user, a utilization rate and a conversion rate of the electronic voucher are promoted. At the same time, since before the electronic voucher is assigned to the user, after the user completes the order and the terminal device provides the user with the sharing information matching the order information, the user interacts with the terminal device to complete sharing of the sharing information, and then the terminal device assigns the electronic voucher to the user, thus further improves the user's attention to the electronic voucher and enhancing an interactivity in the process of collecting the electronic voucher.

### BRIEF DESCRIPTION OF DRAWINGS

The accompanying drawings herein, which are incorporated into the specification and constitute a part of the description, illustrate embodiments consistent with the present application and are used together with the description to explain the principles of the present application.
FIG. 1 is a schematic diagram of an application scenario according to an embodiment of the present application.
FIG. 2 is a schematic flowchart of an electronic voucher assigning method according to an embodiment of the present application.
FIG. 3 is a schematic flowchart of another electronic voucher assigning method according to an embodiment of the present application.
FIG. 4 is an operation schematic diagram according to an embodiment of the present application.
FIG. 5 is a schematic flowchart of a further electronic voucher assigning method according to an embodiment of the present application.
FIG. 6 is a schematic flowchart of yet another electronic voucher assigning method according to an embodiment of the present application.
FIG. 7 is a schematic interface diagram of a process of establishing an electronic voucher according to an embodiment of the present application.
FIG. 8 is a schematic interface diagram of a process of querying an electronic voucher according to an embodiment of the present application.
FIG. 9 is a schematic structural diagram of an electronic voucher assigning apparatus according to an embodiment of the present application.
FIG. 10 is a schematic structural diagram of another electronic voucher assigning apparatus according to an embodiment of the present application.
FIG. 11 is a block diagram of a terminal device according to an embodiment of the present application.

Specific embodiments of the present application have been shown by the above accompanying drawings, and will be described in more detail hereinafter. These accompanying drawings and textual descriptions are not intended to limit the scope of the concepts of the present application in any way, but to explain the concepts of the present application for those skilled in the art by referring to specific embodiments.

### DESCRIPTION OF EMBODIMENTS

Exemplary embodiments will be described in detail herein, examples of which are illustrated in the accompanying drawings. When the following description refers to the accompanying drawings, the same numerals in different accompanying drawings refer to the same or similar elements unless otherwise indicated. The implementations described in the exemplary embodiments below are not intended to represent all implementations consistent with the present application. Rather, they are merely examples of apparatuses and methods consistent with some aspects of the present application as recited in the appended claims.

With the development of the mobile Internet, in order to better meet the needs of users for online learning, entertainment and consumption, a variety of virtual object assigning methods have emerged. The virtual objects are, for example, digital money and electronic red packets. A virtual object may be referred to as an electronic voucher. Electronic vouchers can be assigned.

In the prior art, when assigning an electronic voucher, after a user is selected, and when assigning an electronic voucher, it is generally to charge a directional electronic voucher into a user's account.

However, in the above method, if the directional electronic voucher is directly put into the user's account, the targeted electronic voucher is not necessarily required by the user because the directional electronic voucher is passively collected. As a result, the user's perception will be low, and the interactivity of receiving electronic vouchers will be lacking, resulting in a low utilization rate and conversion rate of the electronic voucher.

Therefore, the inventor proposes the technical solution of the present application based on the above inventive discoveries. The technical solution of the present application and how the technical solution of the present application solves the above technical problems will be described in detail below with specific embodiments. The following specific embodiments may be combined with each other, and the same or similar concepts or processes may not be repeated in some embodiments. Embodiments of the present application will be described below with reference to the accompanying drawings.

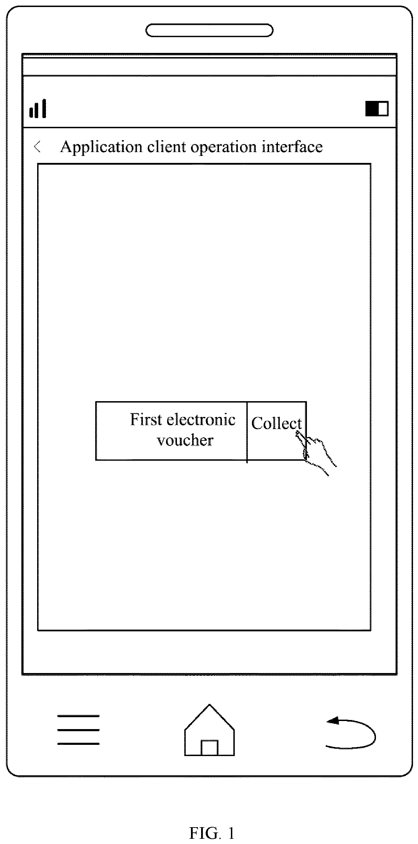

The following describes an application scenario of an electronic voucher assigning method according to an embodiment of the present application. FIG. 1 is a schematic diagram of an application scenario according to an embodiment of the present application. As shown in FIG. 1, when an electronic voucher needs to be collected, an application client of a terminal device displays the electronic voucher on an operation interface. A user triggers "collect" button on the operation interface, and then the terminal device receives a collecting trigger instruction. The terminal device stores the electronic voucher in an account assigned to the user according to the collecting trigger instruction. However, in the present application, the terminal device may further perform other assignment processing procedures, and then store the electronic voucher in the account assigned to the user.

It could be understood that the application scenario of the electronic voucher assigning method according to the embodiment of the present application can also be other application scenarios, and the application scenarios are not limited in the embodiments of the present application. And other application scenarios will be exemplarily described in the introduction of the following embodiments.

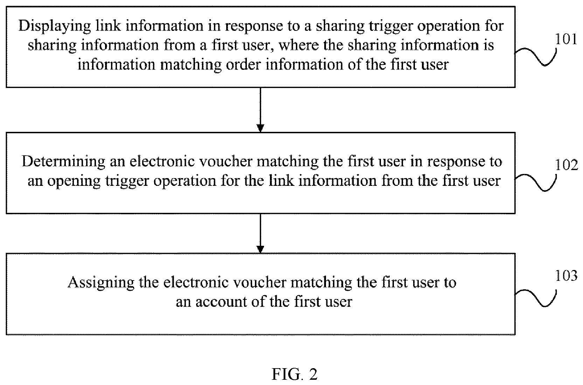

FIG. 2 is a schematic flowchart of an electronic voucher assigning method according to an embodiment of the present application. As shown in FIG. 2, the method includes:
101, displaying link information in response to a sharing trigger operation for sharing information from a first user, where the sharing information is information matching order information of the first user.

Exemplarily, an execution subject of this embodiment may be a terminal device, or an electronic device, or an electronic voucher assigning apparatus, or an electronic voucher assigning device, or other apparatuses or devices that can execute this embodiment, which is not limited thereto. This embodiment is described by taking the terminal device as the execution subject.

After the first user completes an order using the terminal device, the terminal device can acquire order information, and then the terminal device can generate and display a sharing button, which indicates sharing information matching the order information.

In one example, the first user interacts with the terminal device to complete the order, and the terminal device can acquire the order information. The terminal device can store the order information locally, or the terminal device can interact with a server to store the order information in the server. Then, the terminal device may generate sharing information matching the order information. After a certain period of time, if the first user needs to share the sharing information, the first user triggers the terminal device to display the sharing information. For example, the first user touches a screen of the terminal device, and the terminal device displays the sharing information; or the first user sends gesture information to the terminal device, and the terminal device displays the sharing information according to the gesture information.

In another example, the first user interacts with the terminal device to complete the order, and the terminal device can acquire the order information. The terminal device may generate sharing information matching the order information; then, the terminal device directly displays the sharing information. At this time, the first user interacts with the terminal device, and the terminal device displays the sharing information according to an interaction instruction of the first user.

The sharing information includes but is not limited to the following content: text information, picture information, video information, voice information, link content, etc. The sharing information can be recommended content of a store, or promotion content, or public welfare content, and so on.

Moreover, the sharing information and the order information of the first user match each other. In one example, the terminal device may perform data analysis on the first user based on the order information of the first user to obtain behavior information and/or portrait information of the first user. For example, the terminal device may analyze the order information using a preset model to obtain the behavior information or portrait information of the first user. Then, the terminal device generates the sharing information according to the behavior information and/or portrait information of the first user obtained at this time.

Furthermore, after the terminal device displays the sharing information matching the order information of the first user, the first user chooses to share the sharing information. The first user sends a sharing trigger operation to the terminal device, where the sharing trigger operation may be a touch instruction, a gesture instruction, or a voice instruction. Moreover, the sharing trigger operation indicates a sharing location. The terminal device sends the sharing information matching the order information of the first user to the sharing location according to the sharing trigger operation.

For example, the terminal device receives the sharing trigger operation initiated by the first user, and the sharing trigger operation indicates to forward the current sharing information to a designated application. The terminal device displays the sharing information on an interface of the designated application according to the sharing trigger operation.

For another example, the terminal device receives the sharing trigger operation initiated by the first user, and the sharing trigger operation indicates to forward the current sharing information to a designated webpage. The terminal device displays the sharing information on the designated webpage according to the sharing trigger operation.

Then, after the terminal device shares the sharing information according to the sharing trigger operation of the first user, the terminal device displays link information. At this time, the terminal device may directly display a link, which is used to display an electronic voucher to be assigned. At this time, the terminal device may have assigned the electronic voucher to the user, or the terminal device may have not yet assigned the electronic voucher to the first user.

The "first" in the first user is distinguished from the "second" in the second user and the "third" in the third user in subsequent embodiments to represent different users.

102, determining an electronic voucher matching the first user in response to an opening trigger operation for the link information from the first user.

Exemplarily, after step 101, the first user chooses whether to open the link information, and when the first user chooses to open the link information, the first user initiates an opening trigger operation to the terminal device. The opening trigger operation may be a touch instruction, a gesture instruction, or a voice instruction. The opening trigger operation indicates to open the link information.

After the terminal device receives the opening trigger operation, or when the terminal device displays the link information, an electronic voucher matching the first user may be determined.

In one example, the terminal device may generate an electronic voucher matching specific content according to the specific content in the order information. For example, the order information includes a user identifier, and the terminal device may generate an electronic voucher matching the user identifier; or, the order information includes a user address, a purchased item, and the terminal device may generate an electronic voucher matching the user address, the purchased item.

In another example, the terminal device may acquire the portrait information of the first user in advance. For example, the terminal device may acquire a variety of user information of a user from other devices, and analyze the variety of user information to obtain the portrait information. Then, the terminal device generates an electronic voucher matching the portrait information of the first user.

An electronic voucher can be an electronic red envelope, a coupon, a digital red envelope, and so on.

103, assigning the electronic voucher matching the first user to an account of the first user.

Exemplarily, after step 102, the terminal device may also display the electronic voucher matching the first user, and then store the electronic voucher matching the first user in an account of the first user; or, after step 102, the terminal device may directly store the electronic voucher matching the first user in an account of the first user.

In one example, when the terminal device stores the electronic voucher matching the first user in the account of the first user, the terminal device stores the order information in an application, and has displayed the sharing information in another designated application before, and then the terminal device may store the electronic voucher matching the first user in an account of "another designated application".

In another example, when the terminal device stores the electronic voucher matching the first user in the account of the first user, the terminal device stores the order information in an application, and displays the sharing information on an interface of the application, so that the terminal device may store the electronic voucher matching the first user in an account of the application.

In this embodiment, link information is displayed in response to a sharing trigger operation for sharing information from a first user, where the sharing information is information matching order information of the first user; an electronic voucher matching the first user is determined in response to an opening trigger operation for the link information from the first user; and the electronic voucher matching the first user is assigned to an account of the first user. After a user completes an order by user interaction with a terminal device, the terminal device may generate sharing information matching order information. The terminal device displays the sharing information according to a user's trigger instruction, and then the user shares the sharing information. Then, the terminal device displays link information indicating an electronic voucher matching the first user. After the terminal device receives an opening instruction for the link information form the user, the terminal device stores the electronic voucher matching the user in an account of the first user. Since the obtained sharing information matches the order information, information provided to the user conforms to current actual needs of the user, and sharing information that meets the current needs of the user is recommended for the user. Moreover, the electronic voucher provided to the user matches the user, so that the electronic voucher assigned to the user meets the current needs of the user, and the user is assigned with the electronic voucher that meets the user. Since the user is assigned with the electronic voucher that meets the user, a utilization rate and a conversion rate of the electronic voucher are promoted. At the same time, since before the electronic voucher is assigned to the user, after the user completes the order and the terminal device provides the user with the sharing information matching the order information, the user interacts with the terminal device to complete sharing of the sharing information, and then the terminal device assigns the electronic voucher to the user, thus further improving the user's attention to the electronic voucher and enhancing an interactivity in the process of collecting the electronic voucher.

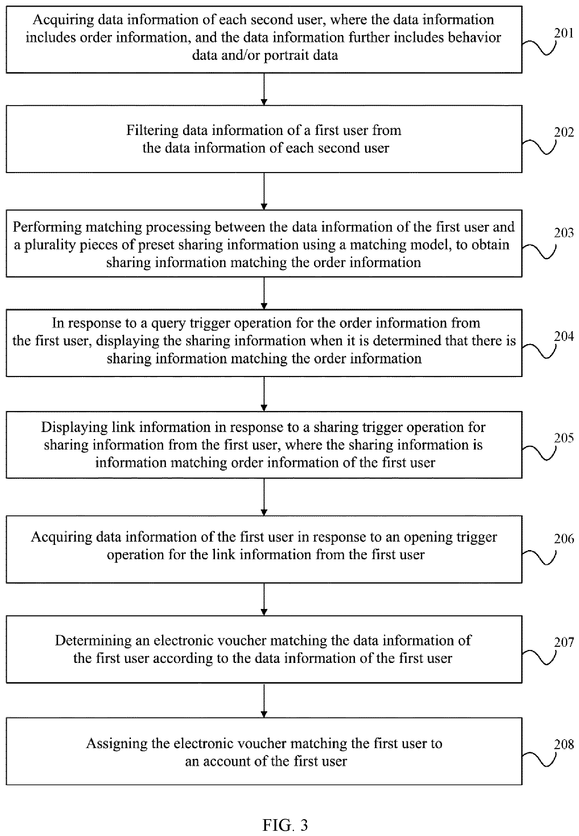

FIG. 3 is a schematic flowchart of another electronic voucher assigning method according to an embodiment of the present application. As shown in FIG. 3, the method includes:
201, acquiring data information of each second user, where the data information includes order information, and the data information further includes behavior data and/or portrait data.

In one example, step 201 specifically includes: capturing the data information of each second user from a terminal device; or, sending a first acquiring instruction to a server, and receiving the data information of each second user returned by the server.

Exemplarily, an execution subject of this embodiment may be a terminal device, or an electronic device, or an electronic voucher assigning apparatus, or an electronic voucher assigning device, or other apparatuses or devices that can execute this embodiment, which is not limited thereto. This embodiment is described by taking the terminal device as the execution subject.

After a second user interacts with other devices to complete an order of the second user, other devices may acquire order information of the second user. Other devices may send the order information of the second user to the terminal device, and when other devices send the order information of the second user to the terminal device, other devices may further send user information of the second user to the terminal device, and the terminal device may analyze the user information of the second user to obtain behavior data and/or portrait data, or, other devices directly send the behavior data and/or portrait data of the second user to the terminal device. Or, other devices may send the order information of the second user to the server for storage, and other devices may further send the user information of the second user to the server, and the server may analyze the user information of the second user to obtain behavior data and/or portrait data, or, other devices directly send the behavior data and/or portrait data of the second user to the server.

Thus, the terminal device may acquire data information of a plurality of second users, and the data information includes behavior data and/or portrait data of the second users. The data information further includes a user identifier. In addition, the terminal device adds order information of a first user to the data information.

When generating the behavior data and/or portrait data, a preset deep learning model may be used to analyze the user information to obtain the behavior data and/or portrait data of the second user.

202, filtering data information of the first user from the data information of each second user.

Exemplarily, in order to analyze the first user, the terminal device needs to filter data information of the first user from the data information of the second user(s) according to a user identifier of the first user.

203, performing matching processing between the data information of the first user and a plurality pieces of preset sharing information using a matching model, to obtain sharing information matching the order information.

Exemplarily, the terminal device has generated a plurality pieces of sharing information, or the terminal device has acquired a plurality pieces of sharing information from the server. The sharing information includes behavior data and/or portrait data of a user. Thus, the terminal device performs matching analysis between the data information of the first user and the plurality pieces of sharing information based on the matching model to obtain the sharing information matching the order information of the first user.

For example, the matching model is a deep learning model, or the matching model is a linear analysis model.

204, in response to a query trigger operation for the order information from the first user, displaying the sharing information when it is determined that there is sharing information matching the order information.

In one example, the query trigger operation includes query information composed of an order identifier, a store identifier and a Personal Identification Number (PIN) code in the order information. Or, the query trigger operation includes encrypted query information composed of an order identifier, a store identifier, and a PIN code in the order information.

Exemplarily, after the first user completes an order using the terminal device, the terminal device can acquire order information, and then the terminal device can generate and display a sharing button which indicates sharing information matching the order information.

After the terminal device displays the sharing information matching the order information of the first user, the first user chooses to share the sharing information.

The first user sends an instruction to the terminal device, for example, a touch instruction, a gesture instruction, or a voice instruction. The terminal device may generate query information based on an order identifier, a store identifier and a PIN code in the order information of the first user, and then generate a query trigger operation according to the query information.

Or, the first user sends an instruction to the terminal device, for example, a touch instruction, a gesture instruction, or a voice instruction. The terminal device may generate query information based on an order identifier, a store identifier and a PIN code in the order information of the first user, and encrypt the query information, and then generate a query trigger operation according to the encrypted query information.

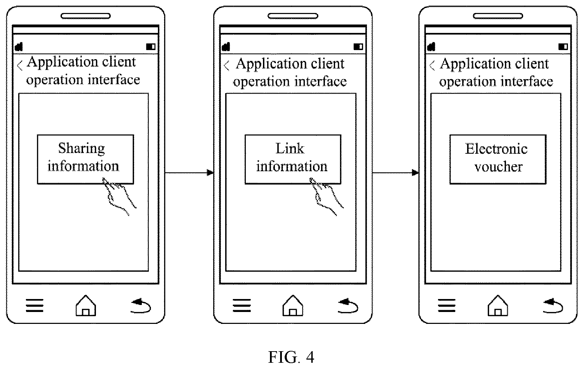

The terminal device first queries whether there is sharing information matching the order information of the first user according to the query trigger operation. Since the sharing information matching the order information of the first user is generated in step 203, the terminal device determines that there is sharing information matching the order information of the first user. Then, FIG. 4 is an operation schematic diagram according to an embodiment of the present application. As shown in FIG. 4, the terminal device displays the sharing information matching the order information of the first user.

205, displaying link information in response to a sharing trigger operation for sharing information from the first user, where the sharing information is information matching order information of the first user.

In one example, step 205 specifically includes: in response to the sharing trigger operation for the sharing information from the first user, acquiring and displaying the link information locally;
or, in response to the sharing trigger operation for the sharing information from the first user, sending a second acquiring instruction to the server, and receiving the link information returned by the server.

Exemplarily, after the terminal device displays the sharing information matching the order information of the first user, the first user chooses to share the sharing information. The first user sends a sharing trigger operation to the terminal device, where the sharing trigger operation may be a touch instruction, a gesture instruction, or a voice instruction. Moreover, the sharing trigger operation indicates a sharing location.

Then, the terminal device acquires link information corresponding to the sharing information matching the order information of the first user from a local cache. Or, the terminal device sends a second acquiring instruction to the server, and receives link information corresponding to the sharing information matching the order information of the first user returned by the server.

As shown in FIG. 4, the terminal device may directly display a link which is used to display the electronic voucher to be assigned.

206, acquiring data information of the first user in response to an opening trigger operation for the link information from the first user, where the data information of the first user includes one or more of the following: order information, behavior data, portrait data, sharing times, and user information.

Exemplarily, after step 205, the first user chooses whether to open the link information, and when the first user chooses to open the link information, the first user initiates an opening trigger operation to the terminal device. The opening trigger operation may be a touch instruction, a gesture instruction, or a voice instruction. The opening trigger operation indicates to open the link information.

The terminal device needs to assign the electronic voucher to the first user. At this time, the terminal device needs to acquire the data information of the first user first. The data information of the first user includes but is not limited to: order information, behavior data, portrait data, sharing times, and user information.

The order information is generated by data interaction between the first user and the terminal device, the behavior data and portrait data are generated by the terminal device based on the user information (for example, the behavior data and portrait data are generated according to the deep learning model), and sharing times is the number of sharing determined by the terminal device when the first user interacts with the terminal device.

207, determining an electronic voucher matching the data information of the first user according to the data information of the first user.

In one example, step 207 specifically includes: randomly generating an electronic voucher for the first user according to the user information of the first user. Or, determining type information matching the first user according to at least one or more of the order information, the behavior data, the portrait data, the sharing times of the first user, and type information of a plurality of electronic vouchers, to obtain the electronic voucher matching the data information of the first user.

Exemplarily, the data information of the first user includes but is not limited to: order information, behavior data, portrait data, sharing times, and user information.

Thus, the terminal device may randomly generate the electronic voucher for the first user based on the user information of the first user. For example, the electronic voucher is randomly generated according to the user identifier. At this time, in fact, there is also a matching relationship between the electronic voucher and the first user.

Or, the terminal device has acquired the data information of the first user, and the terminal device has also acquired type information of each of the plurality of electronic vouchers, where the type information of the electronic voucher includes an identifier of the electronic voucher, a user group identifier applicable to the electronic voucher, and user group characteristics applicable to the electronic voucher. Further, the terminal device may perform matching processing between the user information of the first user and the type information of the electronic voucher, for example, using a deep learning model to perform the matching, or using a linear analysis model to perform matching, and may obtain the type information matching the first user, and then obtain the electronic voucher matching the data information of the first user.

208, assigning the electronic voucher matching the first user to an account of the first user.

Exemplarily, after step 207, the terminal device may also display the electronic voucher matching the first user, and then store the electronic voucher matching the first user in the account of the first user; or, after step 207, the terminal device may directly store the electronic voucher matching the first user in the account of the first user.

In one example, when the terminal device stores the electronic voucher matching the first user in the account of the first user, the terminal device stores the order information in an application, and has displayed the sharing information in another designated application before, and then the terminal device may store the electronic voucher matching the first user in an account of "another designated application". As shown in FIG. 4, the terminal device displays the electronic voucher matching the first user and directly stores the electronic voucher in the account of the first user.

In this embodiment, based on the above embodiments, sharing information matching order information of a first user can be determined based on a user's behavior data and/or portrait data, so that the sharing information generated for the user meets current needs of the user. Moreover, based on the data information of the first user, the electronic voucher matching the data information of the first user is determined, where the data information of the first user includes one or more of the following: order information, behavior data, portrait data, sharing times, and user information, so that the electronic voucher assigned to the user meets the current needs of the user, and the user is assigned with the electronic voucher that meets the user.

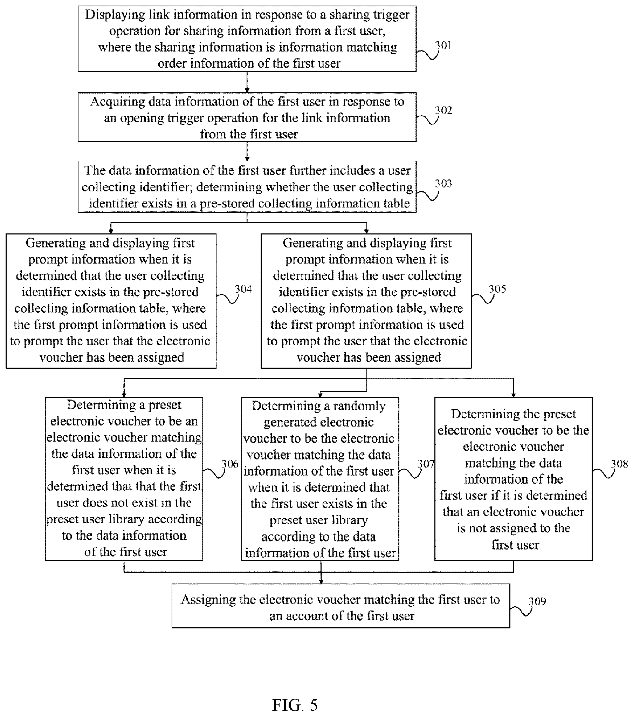

FIG. 5 is a schematic flowchart of a further electronic voucher assigning method according to an embodiment of the present application. As shown in FIG. 5, the method includes:
301, displaying link information in response to a sharing trigger operation for sharing information from a first user, where the sharing information is information matching order information of the first user.

In one example, step 301 specifically includes: in response to the sharing trigger operation for the sharing information from the first user, acquiring and displaying the link information locally;
or, in response to the sharing trigger operation for the sharing information from the first user, sending a second acquiring instruction to the server, and receiving the link information returned by the server.

Exemplarily, for this step, reference may be made to step 205 in FIG. 3, and will not be described again.

In addition, this embodiment can also perform steps 201-204 in FIG. 3.

302, acquiring data information of the first user in response to an opening trigger operation for the link information from the first user, where the data information of the first user includes one or more of the following: order information, behavior data, portrait data, sharing times, and user information.

Exemplarily, for this step, reference can be made to step 206 in FIG. 3, and will not be described again.

303, the data information of the first user further includes a user collecting identifier; determining whether the user collecting identifier exists in a pre-stored collecting information table; where the collecting information table includes a user collecting identifier to which an electronic voucher has been assigned.

Exemplarily, after the terminal device receives the opening trigger operation for link information initiated by the first user, the terminal device may first determine whether the user has been assigned an electronic voucher, that is, whether the first user has collected an electronic voucher.

The terminal device has pre-stored a collecting information table, and the collecting information table includes a plurality of user collecting identifiers (i.e., user identifiers); a user corresponding to a user collecting identifier in the collection information table is a user who has collected an electronic voucher.

The terminal device may determine whether the user collecting identifier exists in the pre-stored collecting information table according to a user collecting identifier of the first user. If the user collecting identifier of the first user exists in the pre-stored collecting information table, the terminal device determines that the first user has collected the electronic voucher. If the user collecting identifier of the first user does not exist in the pre-stored collecting information table, the terminal device determines that the first user has not collected the electronic voucher.

304, generating and displaying first prompt information when it is determined that the user collecting identifier exists in the pre-stored collecting information table, where the first prompt information is used to prompt the user that the electronic voucher has been assigned.

Exemplarily, when determining that the user collecting identifier of the first user exists in the pre-stored collection information table, the terminal device determines that the first user has collected the electronic voucher, the terminal device generates the first prompt information, which is: voice prompt information, text prompt information, vibration prompt information, light prompt information, and so on.

The terminal device displays the first prompt information, and the first user knows that he has been assigned with an electronic voucher, that is, he has collected (received) the electronic voucher.

305, determining whether the first user exists in a preset user library according to the data information of the first user.

Exemplarily, after step 304, if it is determined that the user collecting identifier does not exist in the pre-stored collection information table, the terminal device determines whether the first user exists in the preset user library, and users in the preset user library are not new users. Since the data information of the first user includes a user identifier and the preset user library has a user identifier for which a store has been registered, the terminal device may determine whether the first user exists in the preset user library according to the data information of the first user, that is, whether the first user is a new user; or, the data information of the first user may represent the time when the first user registered the store, and then the terminal device may directly determine whether the first user is a new user.

306, determining a preset electronic voucher to be an electronic voucher matching the data information of the first user when it is determined that that the first user does not exist in the preset user library according to the data information of the first user.

Exemplarily, when the terminal device determines that the first user does not exist in the preset user library, the terminal device determines that the first user is a new user, then the terminal device may take the preset electronic voucher to be the electronic voucher matching the first user, and then assign it to the first user. In addition, the terminal device needs to analyze the data information of the first user, and assign a preset electronic voucher matching the data information of the first user to the first user. For example, the terminal device assigns a preset electronic voucher matching the portrait data of the first user to the first user.

For example, if the terminal device determines that the first user is a new user, the terminal device assigns a preset electronic gift package to the first user. In addition, information of the electronic gift package matches information of the first user.

307, determining a randomly generated electronic voucher to be the electronic voucher matching the data information of the first user when it is determined that the first user exists in the preset user library according to the data information of the first user.

Exemplarily, when the terminal device determines that the first user exists in the preset user library, the terminal device determines that the first user is not a new user, and the terminal device may perform analysis in combination with the data information of the first user, and assign an electronic voucher to the first user following a random principle. In addition, the terminal device needs to analyze the data information of the first user, and assign a preset electronic voucher matching the data information of the first user to the first user. For example, the terminal device assigns a preset electronic voucher matching the portrait data of the first user to the first user.

For example, if the terminal device determines that the first user is not a new user, the terminal device randomly divides a preset "coupon" electronic voucher into different shares. Then, one of the electronic vouchers is randomly assigned to the first user, and information of this electronic voucher matches the information of the first user.

308, determining the preset electronic voucher to be the electronic voucher matching the data information of the first user if it is determined that an electronic voucher is not assigned to the first user.

Exemplarily, the terminal device may further determine whether an electronic voucher is assigned to the current first user in steps 307 and 308. If it is determined that the electronic voucher is not assigned to the current first user in steps 307 and 308, the terminal device may assign the preset electronic voucher to the first user as an electronic voucher matching the first user. In addition, the terminal device needs to analyze the data information of the first user, and assign a preset electronic voucher matching the data information of the first user to the first user. For example, the terminal device assigns a preset electronic voucher matching the portrait data of the first user to the first user.

309, assigning the electronic voucher matching the first user to an account of the first user.

Exemplarily, after step 308, the terminal device may also display the electronic voucher matching the first user, and then store the electronic voucher matching the first user in an account of the first user; or, after step 308, the terminal device may directly store the electronic voucher matching the first user in an account of the first user.

In this embodiment, on the basis of the above embodiments, a first user can be analyzed based on processes of whether a user collecting identifier exists in a pre-stored collecting information table, whether the first user exists in a preset user library, etc., and then an electronic voucher that is truly suitable for the first user can be assigned to the first user.

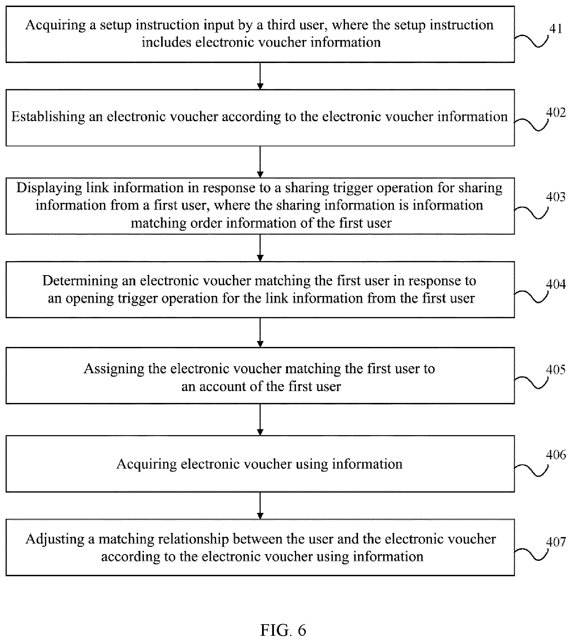

FIG. 6 is a schematic flowchart of yet another electronic voucher assigning method according to an embodiment of the present application. As shown in FIG. 6, the method includes:
401, acquiring a setup instruction input by a third user, where the setup instruction includes electronic voucher information; the electronic voucher information includes one or more of the following: store address information, a store identifier, and the number of electronic vouchers.

Exemplarily, before assigning an electronic voucher to a first user, it is necessary to first establish the electronic voucher. The third user may send the setup instruction to a terminal device so that the terminal device establishes the electronic voucher.

The third user may use an input medium (e.g., a keyboard, a mouse, etc.) to input electronic voucher information into the terminal device, and the electronic voucher information includes but is not limited to: store address information, a store identifier, and the number of electronic vouchers.

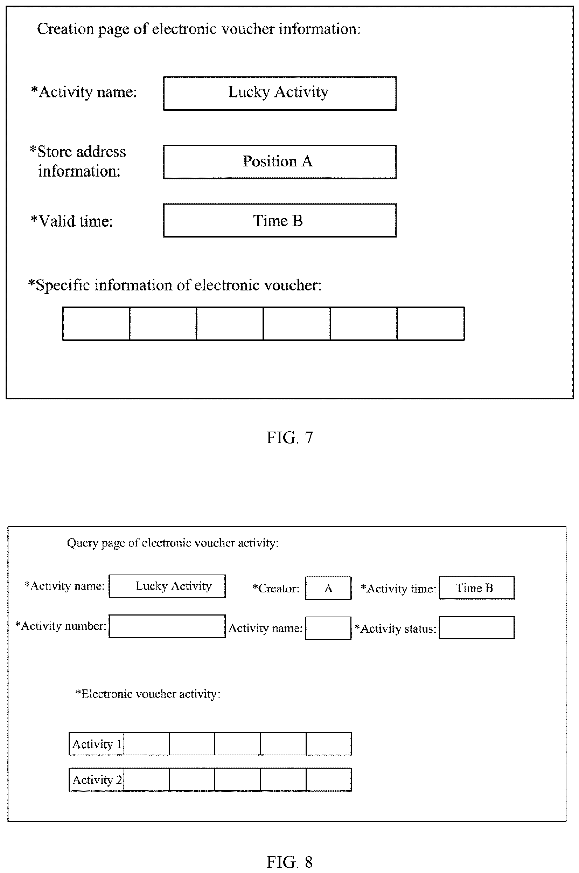

For example, FIG. 7 is a schematic interface diagram of a process of establishing an electronic voucher according to an embodiment of the present application. As shown in FIG. 7, the third user triggers the terminal device to enter a "creation page of electronic voucher information" corresponding to the store identifier, and the terminal device displays an option of "activity name", an option of "store address information", an option of "valid time", an option of filling in "specific information of electronic voucher". The terminal device receives input information of the third user and obtains the electronic voucher information. In addition, the terminal device may obtain the number of electronic vouchers according to the specific information of electronic voucher.

In addition, the third user may query specific information of each activity of the current electronic voucher. For example, FIG. 8 is a schematic interface diagram of a process of querying an electronic voucher according to an embodiment of the present application. As shown in FIG. 8, the third user triggers the terminal device to enter a "query page of electronic voucher activity", and the terminal device displays options such as "activity name", "activity number" and "activity status". The user inputs the above activity information, and then the terminal device displays specific information of each corresponding activity, for example, specific information of activity 1 (the number of remaining electronic vouchers, a collecting manner, etc.) and specific information of activity 2 (the number of remaining electronic vouchers, a collection manner, etc.).

402, establishing the electronic voucher according to the electronic voucher information.

Exemplarily, the terminal device may establish a plurality of electronic vouchers according to the electronic voucher information.

In addition, the execution subject of the above steps 401-402 may be a terminal device corresponding to the third user.

403, displaying link information in response to a sharing trigger operation for sharing information from a first user, where the sharing information is information matching order information of the first user.

404, determining an electronic voucher matching the first user in response to an opening trigger operation for the link information from the first user.

405, assigning the electronic voucher matching the first user to an account of the first user.

Exemplarily, for steps 403-405, reference may be made to any of the above embodiments and will not be described again. In addition, this embodiment may further perform steps 201-204 in FIG. 3.

406, acquiring electronic voucher using information, where the electronic voucher using information includes one or more of the following: the number of orders, the number of triggers for sharing order information, the number of collected electronic vouchers, the number of used electronic vouchers, and order information.

Exemplarily, after a plurality of users receive the electronic voucher, the terminal device may acquire the electronic voucher using information.

The electronic voucher using information includes but is not limited to: the number of orders, the number of triggers for sharing order information, the number of collected electronic vouchers, the number of used electronic vouchers, and the order information. The number of orders refers to the number of orders generated by the first user. The number of triggers for sharing order information refers to the number of times each first user analyzes an order. The number of collected electronic vouchers refers to the number of electronic vouchers collected by each first user. The number of used electronic vouchers refers to the number of electronic vouchers used by the first user.

The terminal device may determine a sharing rate according to the number of triggers for sharing order information and the number of orders. The terminal device may determine a collection rate according to the number of collected electronic vouchers and the total number of electronic vouchers. The terminal device may determine a usage rate according to the number of used electronic vouchers and the total number of electronic vouchers.

407, adjusting a matching relationship between the user and the electronic voucher according to the electronic voucher using information.

Exemplarily, the terminal device may adjust the matching relationship between data information of a user and the electronic voucher information based on the electronic voucher using information in step 406, and then adjust the matching relationship between the user and the electronic voucher. Or, the terminal device may adjust the matching relationship between data information of a user and the electronic voucher information based on the sharing rate, the collecting rate, the usage rate, and the number of orders that can be shared.

For example, if a sharing rate of user group A is low, the number of electronic vouchers corresponding to user group A can be increased. If a collection rate of user group B is high, the limit of each electronic voucher corresponding to user group A can be reduced.

For another example, the matching relationship between the user and the electronic voucher can be adjusted according to electronic voucher using information based on a deep learning model.

In addition, the terminal device may further obtain data analysis information GMV= (the number of orders that can be shared * sharing rate *collection rate * usage rate) * unit price of attracted customers based on the sharing rate, collecting rate, usage rate and the number of orders that can be shared. The unit price of attracted customers refers to an average amount of goods purchased by users who purchase goods according to the sharing information.

In this embodiment, on the basis of the above embodiments, an electronic voucher can be established according to electronic voucher information, so as to facilitate subsequent determination of the electronic voucher matching the first user. In addition, the matching relationship between the user and the electronic voucher can be adjusted according to the electronic voucher using information, so that a better match is achieved between the electronic voucher subsequently assigned to the first user and the user.

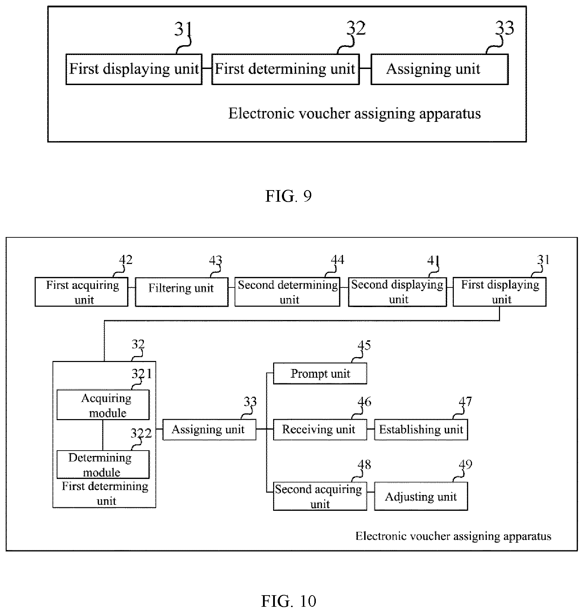

FIG. 9 is a schematic structural diagram of an electronic voucher assigning apparatus according to an embodiment of the present application. As shown in FIG. 9, the apparatus includes:
a first displaying unit 31, configured to display link information in response to a sharing trigger operation for sharing information from a first user, where the sharing information is information matching order information of the first user;
a first determining unit 32, configured to determine an electronic voucher matching the first user in response to an opening trigger operation for the link information from the first user;
an assigning unit 33, configured to assign the electronic voucher matching the first user to an account of the first user.

Exemplarily, for this embodiment, reference can be made to the above method embodiment, and its principle and technical effect are similar, and will not be described again.

FIG. 10 is a schematic structural diagram of another electronic voucher assigning apparatus according to an embodiment of the present application. On the basis of the embodiment shown in FIG. 9, as shown in FIG. 10, the apparatus further includes:
a second displaying unit 41, configured to: in response to a query trigger operation for the order information from the first user, display the sharing information when it is determined that there is sharing information matching the order information, before the first displaying unit 31 displays the link information in response to the sharing trigger operation for the sharing information from the first user.

The apparatus provided by this embodiment further includes:
a first acquiring unit 42, configured to acquire data information of each second user before the second displaying unit 41 displays the sharing information when it is determined that there is sharing information matching the order information, where the data information includes the order information, and the data information further includes behavior data and/or portrait data;
a filtering unit 43, configured to filter data information of the first user from the data information of each second user;
a second determining unit 44, configured to perform matching processing between the data information of the first user and a plurality pieces of preset sharing information using a matching model, to obtain the sharing information matching the order information.

In one example, the first acquiring unit 42 is specifically configured to: capture the data information of each second user from the terminal device; or, send a first acquiring instruction to a server, and receive the data information of each second user returned by the server.

In one example, the query trigger operation includes query information composed of an order identifier, a store identifier and a PIN code in the order information; or, the query trigger operation includes encrypted query information composed of an order identifier, a store identifier, and a PIN code in the order information.

In one example, the first displaying unit 31 is specifically configured to: in response to the sharing trigger operation for the sharing information from the first user, acquire and display the link information locally; or, in response to the sharing trigger operation for the sharing information from the first user, send a second acquiring instruction to the server, and receive the link information returned by the server.

In one example, the first determining unit 32 includes:
an acquiring module 321, configured to acquire data information of the first user, where the data information of the first user includes one or more of the following: order information, behavior data, portrait data, sharing times, and user information;
a determining module 322, configured to determine an electronic voucher matching the data information of the first user according to the data information of the first user.

In one example, the determining module 322 is specifically configured to: randomly generate an electronic voucher for the first user according to the user information of the first user; or, determine type information matching the first user according to at least one or more of the order information, the behavior data, the portrait data, the sharing times of the first user, and type information of a plurality of electronic vouchers, to obtain the electronic voucher matching the data information of the first user.

In one example, the determining module 322 is specifically configured to: determine a preset electronic voucher to be the electronic voucher matching the data information of the first user when it is determined that the first user does not exist in a preset user library according to the data information of the first user; determine a randomly generated electronic voucher to be the electronic voucher matching the data information of the first user when it is determined that the first user exists in the preset user library according to the data information of the first user;
the determining module 322 is further configured to: determine the preset electronic voucher to be the electronic voucher matching the data information of the first user if it is determined that an electronic voucher is not assigned to the first user.

In one example, the data information of the first user further includes a user collecting identifier; the apparatus provided by this embodiment further includes:
a prompt unit 45, configured to generate and display first prompt information when it is determined that the user collecting identifier exists in a pre-stored collecting information table, where the collecting information table includes a user collecting identifier to which an electronic voucher has been assigned, and the first prompt information is used to prompt the user that the electronic voucher has been assigned.

In one example, the apparatus provided by this embodiment further includes:
a receiving unit 46, configured to acquire a setup instruction input by a third user, where the setup instruction includes electronic voucher information; the electronic voucher information includes one or more of the following: store address information, a store identifier, and a number of electronic vouchers;
an establishing unit 47, configured to establish the electronic voucher according to the electronic voucher information.

In one example, the apparatus provided by this embodiment further includes:
a second acquiring unit 48, configured to acquire electronic voucher using information, where the electronic voucher using information includes one or more of the following: a number of orders, a number of triggers for sharing order information, a number of collected electronic vouchers, a number of used electronic vouchers, and order information;
an adjusting unit 49, configured to adjust a matching relationship between the user and the electronic voucher according to the electronic voucher using information.

Exemplarily, for this embodiment, reference can be made to the above method embodiment, and its principle and technical effect are similar.

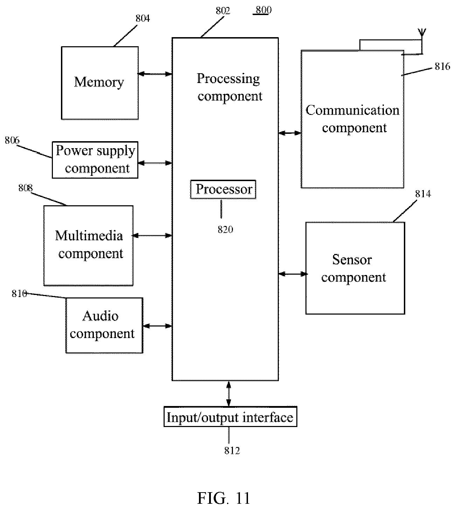

FIG. 11 is a block diagram of a terminal device according to an embodiment of the present application, the device may be a mobile phone, a computer, a digital broadcasting terminal, a messaging device, a game console, a tablet device, a medical device, a fitness device, a personal digital assistant, etc.

An apparatus 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls an overall operation of the apparatus 800, such as operations associated with display, telephone call, data communication, camera operation, and recording operation. The processing component 802 may include one or more processors 820 to execute instructions to complete all or part of the steps of the method described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the apparatus 800. Examples of these data include instructions for any application or method operating on the apparatus 800, contact data, phonebook data, messages, pictures, videos, and the like. The memory 804 may be implemented by any type of volatile or nonvolatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a Disk or an optical disc.

The power supply component 806 provides power to various components of the apparatus 800. The power supply component 806 may include a power management system, one or more power supplies, and other components associated with generating, managing, and distributing power for the apparatus 800.

The multimedia component 808 includes a screen that provides an output interface between the apparatus 800 and a user. In some embodiments, a screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor may not only sense a boundary of the touch or slide action but also detect a duration and pressure related to the touch or slide operation. In some embodiments, the multimedia component 808 includes a front camera and/or a rear camera. When the apparatus 800 is in an operation mode, such as a shooting mode or a video mode, the front camera and/or the rear camera may receive external multimedia data. Each front camera and rear camera can be a fixed optical lens system or have a focal length and optical zoom capability.

The audio component 810 is configured to output and/or input an audio signal. For example, the audio component 810 includes a microphone (MIC) configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and a peripheral interface module, which may be a keyboard, a click wheel, buttons, etc. These buttons may include but are not limited to: a home button, a volume button, a start button and a lock button.

The sensor component 814 includes one or more sensors for providing state evaluation of various aspects of the apparatus 800. For example, the sensor component 814 can detect an opening/closing state of the apparatus 800, a relative positioning of components, e.g., the components may be a display and a keypad of the apparatus 800. The sensor component 814 may also detect a position change of the apparatus 800 or a component of the apparatus 800, presence or absence of a user's contact with the apparatus 800, an orientation or acceleration/deceleration of the apparatus 800, and a temperature change of the apparatus 800. The sensor component 814 may include a proximity sensor configured to detect a presence of a nearby object in an absence of any physical contact. The sensor component 814 may also include a light sensor, such as a CMOS or CCD image sensor, configured to use in an imaging application. In some embodiments, the sensor component 814 may further include an acceleration sensor, a gyro sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as WiFi, 2G or 3G, or a combination thereof. In one exemplary embodiment, the communication component 816 receives a broadcast signal or broadcast related information from an external broadcast management system via a broadcast channel. In one exemplary embodiment, the communication component 816 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an exemplary embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, there is also provided a non-transitory computer-readable storage medium including instructions, such as the memory 804 including instructions which can be executed by the processor 820 of the apparatus 800 to complete the above method. For example, the non-transitory computer-readable storage medium may be a ROM, a random access memory (RAM), a CD-ROM, a magnetic tape, a floppy disk, an optical data storage device, and the like.

A non-transitory computer-readable storage medium, when an instruction in the storage medium is executed by a processor of a terminal device, the terminal device is enabled to execute the above electronic voucher assigning method.

An embodiment of the present application further provides a computer program including program codes. When a computer runs the computer program, the program codes the above method.

Those skilled in the art will easily think of other embodiments of the present application after considering the description and practicing the invention disclosed herein. The present application is intended to cover any variation, use or adaptive change of the present application, which follows general principles of the present application and includes common knowledge or commonly used technical means in the technical field not disclosed in the present application. The description and the embodiments are only regarded as exemplary, and the true scope and spirit of the present application are indicated by the following claims.

It should be understood that the present application is not limited to the precise structure already described above and shown in the accompanying drawings, and various modifications and changes can be made without departing from the scope thereof. The scope of the present application is limited only by the appended claims.

## Claims

1. An electronic voucher assigning method, wherein the method is applied to a terminal device, comprising:
displaying link information in response to a sharing trigger operation for sharing information from a first user, wherein the sharing information is information matching order information of the first user;
determining an electronic voucher matching the first user in response to an opening trigger operation for the link information from the first user;
assigning the electronic voucher matching the first user to an account of the first user.

2. The method according to claim 1, wherein before the displaying link information in response to a sharing trigger operation for sharing information from a first user, the method further comprises:
in response to a query trigger operation for the order information from the first user, displaying the sharing information when it is determined that there is sharing information matching the order information.

3. The method according to claim 2, wherein before the displaying the sharing information when it is determined that there is sharing information matching the order information, the method further comprises:
acquiring data information of each second user, wherein the data information comprises the order information, and the data information further comprises behavior data and/or portrait data;
filtering data information of the first user from the data information of each second user;
performing matching processing between the data information of the first user and a plurality pieces of preset sharing information using a matching model, to obtain the sharing information matching the order information.

4. The method according to claim 3, wherein the acquiring data information of each second user comprises:
capturing the data information of each second user from the terminal device; or, sending a first acquiring instruction to a server, and receiving the data information of each second user returned by the server.

5. The method according to any one of claims 2-4, wherein the query trigger operation comprises query information composed of an order identifier, a store identifier and a PIN code in the order information;
or, the query trigger operation comprises encrypted query information composed of an order identifier, a store identifier, and a PIN code in the order information.

6. The method according to any one of claims 1-5, wherein the displaying link information in response to a sharing trigger operation for sharing information from a first user comprises:
in response to the sharing trigger operation for the sharing information from the first user, acquiring and displaying the link information locally;
or, in response to the sharing trigger operation for the sharing information from the first user, sending a second acquiring instruction to the server, and receiving the link information returned by the server.

7. The method according to any one of claims 1-6, wherein the determining an electronic voucher matching the first user comprises:
acquiring data information of the first user, wherein the data information of the first user comprises one or more of the following: order information, behavior data, portrait data, sharing times, and user information;
determining an electronic voucher matching the data information of the first user according to the data information of the first user.

8. The method according to claim 7, wherein the determining an electronic voucher matching the data information of the first user according to the data information of the first user comprises:
randomly generating an electronic voucher for the first user according to the user information of the first user;
or, determining type information matching the first user according to at least one or more of the order information, the behavior data, the portrait data, the sharing times of the first user, and type information of a plurality of electronic vouchers, to obtain the electronic voucher matching the data information of the first user.

9. The method according to claim 7, wherein the determining an electronic voucher matching the data information of the first user according to the data information of the first user comprises:
determining a preset electronic voucher to be the electronic voucher matching the data information of the first user when it is determined that the first user does not exist in a preset user library according to the data information of the first user;
determining a randomly generated electronic voucher to be the electronic voucher matching the data information of the first user when it is determined that the first user exists in the preset user library according to the data information of the first user;
the method further comprises:
determining the preset electronic voucher to be the electronic voucher matching the data information of the first user if it is determined that an electronic voucher is not assigned to the first user.

10. The method according to any one of claims 7-9, wherein the data information of the first user further comprises a user collecting identifier; and the method further comprises:
generating and displaying first prompt information when it is determined that the user collecting identifier exists in a pre-stored collecting information table, wherein the collecting information table comprises a user collecting identifier to which an electronic voucher has been assigned, and the first prompt information is used to prompt the user that the electronic voucher has been assigned.

11. The method according to any one of claims 1-10, further comprising:
acquiring a setup instruction input by a third user, wherein the setup instruction comprises electronic voucher information; the electronic voucher information comprises one or more of the following: store address information, a store identifier, and a number of electronic vouchers;
establishing the electronic voucher according to the electronic voucher information.

12. The method according to any one of claims 1-11, further comprising:
acquiring electronic voucher using information, wherein the electronic voucher using information comprises one or more of the following: a number of orders, a number of triggers for sharing order information, a number of collected electronic vouchers, a number of used electronic vouchers, and order information;
adjusting a matching relationship between the user and the electronic voucher according to the electronic voucher using information.

13. An electronic voucher assigning apparatus, wherein the apparatus is applied to a terminal device, and the apparatus comprises:
a first displaying unit, configured to display link information in response to a sharing trigger operation for sharing information from a first user, wherein the sharing information is information matching order information of the first user;
a first determining unit, configured to determine an electronic voucher matching the first user in response to an opening trigger operation for the link information from the first user;
an assigning unit, configured to assign the electronic voucher matching the first user to an account of the first user.

14. The apparatus according to claim 13, wherein the apparatus further comprises:
a second displaying unit, configured to: in response to a query trigger operation for the order information from the first user, display the sharing information when it is determined that there is sharing information matching the order information, before the first displaying unit displays the link information in response to the sharing trigger operation for the sharing information from the first user.

15. The apparatus according to claim 14, wherein the apparatus further comprises:
a first acquiring unit, configured to acquire data information of each second user before the second displaying unit displays the sharing information when it is determined that there is sharing information matching the order information, wherein the data information comprises the order information, and the data information further comprises behavior data and/or portrait data;
a filtering unit, configured to filter data information of the first user from the data information of each second user;
a second determining unit, configured to perform matching processing between the data information of the first user and a plurality pieces of preset sharing information using a matching model, to obtain the sharing information matching the order information.

16. The apparatus according to claim 15, wherein the first acquiring unit is specifically configured to:
capture the data information of each second user from the terminal device; or, send a first acquiring instruction to a server, and receive the data information of each second user returned by the server.

17. The apparatus according to any one of claims 14-16, wherein the query trigger operation comprises query information composed of an order identifier, a store identifier and a PIN code in the order information;
or, the query trigger operation comprises encrypted query information composed of an order identifier, a store identifier, and a PIN code in the order information.

18. The apparatus according to any one of claims 13-17, wherein the first displaying unit is specifically configured to:
in response to the sharing trigger operation for the sharing information from the first user, acquire and display the link information locally;
or, in response to the sharing trigger operation for the sharing information from the first user, send a second acquiring instruction to the server, and receive the link information returned by the server.

19. The apparatus according to any one of claims 13-18, wherein the first determining unit comprises:
an acquiring module, configured to acquire data information of the first user, wherein the data information of the first user comprises one or more of the following: order information, behavior data, portrait data, sharing times, and user information;
a determining module, configured to determine an electronic voucher matching the data information of the first user according to the data information of the first user.

20. The apparatus according to claim 19, wherein the determining module is specifically configured to:
randomly generate an electronic voucher for the first user according to the user information of the first user;
or, determine type information matching the first user according to at least one or more of the order information, the behavior data, the portrait data, the sharing times of the first user, and type information of a plurality of electronic vouchers, to obtain the electronic voucher matching the data information of the first user.

21. The apparatus according to claim 19, wherein the determining module is specifically configured to:
determine a preset electronic voucher to be the electronic voucher matching the data information of the first user when it is determined that the first user does not exist in a preset user library according to the data information of the first user;
determine a randomly generated electronic voucher to be the electronic voucher matching the data information of the first user when it is determined that the first user exists in the preset user library according to the data information of the first user;
the determining module is further configured to:
determine the preset electronic voucher to be the electronic voucher matching the data information of the first user if it is determined that an electronic voucher is not assigned to the first user.

22. The apparatus according to any one of claims 19-21, wherein the data information of the first user further comprises a user collecting identifier; and the apparatus further comprises:
a prompt unit, configured to generate and display first prompt information when it is determined that the user collecting identifier exists in a pre-stored collecting information table, wherein the collecting information table comprises a user collecting identifier to which an electronic voucher has been assigned, and the first prompt information is used to prompt the user that the electronic voucher has been assigned.

23. The apparatus according to any one of claims 13-22, further comprising:
a receiving unit, configured to acquire a setup instruction input by a third user, wherein the setup instruction comprises electronic voucher information; the electronic voucher information comprises one or more of the following: store address information, a store identifier, and a number of electronic vouchers;
an establishing unit, configured to establish the electronic voucher according to the electronic voucher information.

24. The apparatus according to any one of claims 13-23, further comprising:
a second acquiring unit, configured to acquire electronic voucher using information, wherein the electronic voucher using information comprises one or more of the following: a number of orders, a number of triggers for sharing order information, a number of collected electronic vouchers, a number of used electronic vouchers, and order information;
an adjusting unit, configured to adjust a matching relationship between the user and the electronic voucher according to the electronic voucher using information.

25. A terminal device, comprising a memory and a processor;
the memory is configured to store a memory of executable instructions for the processor;
the processor is configured to execute, according to the executable instructions, the method according to any one of claims 1-12.

26. A computer-readable storage medium, wherein the computer-readable storage medium stores computer execution instructions, which, when executed by a processor, are used to implement the method according to any one of claims 1-12.

27. A computer program, comprising program codes, when a computer runs the computer program, the program codes executes the method according to any one of claims 1-12.
